# DEMANDE DE BREVET EUROPEEN

(11) **EP 1 505 426 A2**
(43) Date de publication de la demande: **09.02.2005**
(21) Numéro de dépôt: 04020829.0
(22) Date de dépôt: 18.06.2003
(51) Int. Cl.: G02C 11/02

(54) **Monture de lunettes transformable et élément de transformation associé**

(30) Priorité: 30.09.2002 FR 0212143
(62) Demande divisionnaire de: 03291481.4
(71) Demandeur: Tand'm S.a.r.l., 39800 Poligny (FR)
(72) Inventeur: Charmoille, Patricia, 25A, rue Proudhon 25000 Besancon (FR)
(74) Mandataire: Bentz, Jean-Paul

(57) **Abrégé**

Lunettes (1) constituées par deux verres (2, 3) soutenus par une monture (4) comprenant deux branches latérales (5, 6) reliées par l'intermédiaire de charnières à une face (7) sur laquelle est susceptible d'être rapporté de manière amovible au moins un élément (9) de transformation de l'aspect de ladite monture (4), par l'intermédiaire de moyens de fixation, caractérisées en ce que ces moyens de fixation sont constitués d'une part par au moins un pion (10B) de l'élément de transformation (9) et d'autre part par un logement (11B) sensiblement correspondant de la face (7) de la monture (4), ou inversement, ledit pion (10B) étant constitué par un plot ou manchon métallique coopérant avec le logement correspondant (11B), au fond duquel logement est inséré à force ou collé, un élément magnétique (24).

## Description

La présente invention concerne une paire de lunettes constituée par deux verres soutenus par une monture comprenant deux branches latérales reliées entre elles par une face, au centre de laquelle est formé un nez.

Il est déjà connu des moyens de transformation de l'aspect de cette monture, de manière telle qu'avec une même paire de lunettes, on puisse transformer son apparence, à l'aide d'une monture différente à rapporter sur la monture de base.

Pour cela, il est connu de disposer d'au moins une face complète de couleur différente, à rapporter sur la monture d'origine afin de changer l'aspect de celle-ci.

Un inconvénient réside dans le fait, qu'une telle face amovible doit avoir une forme identique à la monture d'origine, car cette dernière se loge en fait dans des gorges internes de la monture optionnelle.

Dans de telles conditions, on comprend bien que seule la couleur peut être changée, la forme ne pouvant l'être en aucun cas.

Dès lors, les transformations d'aspect sont limitées.

Il a également été proposé par le passé de rapporter des montures auxiliaires sur des montures principales, comme par exemple pour transformer des lunettes de base en lunettes de soleil.

C'est ainsi que sont apparues des montures équipées de verres solaires, sans branche mais équipée de deux pinces, venant enserrer les verres des lunettes de base.

Mais ces lunettes ne sont pas d'un esthétisme heureux.

Il est également connu, des montures auxiliaires dont la fixation sur une monture principale est effectuée par des aimants.

Dans ce dernier cas, les parties métalliques sont montées sur l'une des montures en coïncidence avec des éléments magnétiques montés sur l'autre monture.

L'inconvénient, c'est que cela ne procure qu'une retenue en profondeur par rapport aux lunettes mais nullement dans un sens transversal, ni dans un sens longitudinal, ce qui provoque le déplacement de la monture auxiliaire dans l'un des deux sens précités, ce qui peut s'avérer fastidieux et inesthétique.

Il est également connu, de pouvoir réaliser des montures principales à partir d'une face partiellement constituée formant une base standard et en rapportant sur celle-ci pour la terminer, une pièce qui peut être d'une forme ou d'une autre.

Dans ce cas, la monture des lunettes de base ne peut pas être utilisée seule et nécessite toujours l'adjonction de la pièce de finition qui pourra être d'une forme ou d'une autre.

En aucun cas, selon ce dernier exemple, la monture de base pourra être utilisée seule tout en permettant sa transformation au gré de l'utilisateur.

La présente invention a pour but d'atteindre ce dernier résultat, tout en remédiant aux inconvénients précités et concerne à cet effet, des lunettes constituées par deux verres soutenus par une monture comprenant deux branches latérales reliées par l'intermédiaire de charnières à une face sur laquelle est susceptible d'être rapporté de manière amovible au moins un élément de transformation de l'aspect de ladite monture, par l'intermédiaire de moyens de fixation complémentaires disposés d'une part sur la face de la monture et d'autre part sur l'élément de transformation amovible, caractérisées en ce que ces moyens de fixation sont constitués d'une part par au moins un pion réalisé perpendiculairement à la face arrière de l'élément de transformation et d'autre part par un logement sensiblement correspondant réalisé perpendiculairement à une zone avant de la face de la monture, ou inversement, le pion étant constitué par un plot ou manchon métallique de dimensions et de formes telles à coopérer de manière coulissante avec le logement correspondant, selon un positionnement adéquat et au fond duquel logement est inséré à force ou collé, un élément magnétique pour constituer des moyens de verrouillage complémentaires destinés à assurer la retenue positive ou la possibilité de retrait du pion d'où de l'élément de transformation, selon trois axes XYZ perpendiculaires entre eux, dans le sens de la profondeur, dans le sens longitudinal et dans le sens transversal.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :
La figure 1 est une vue avant d'une face de monture d'une paire de lunettes selon l'invention assortie à un élément de transformation selon un premier exemple de réalisation avant montage de celui-ci.
La figure 2 est une vue selon la figure 1 d'une monture de lunettes et d'un élément de transformation selon la figure 1 après montage.
La figure 3 est une vue en coupe transversale d'une partie de la monture montrant des moyens de fixation magnétiques d'un élément de transformation sur une monture en matière plastique, selon un second mode de réalisation.
La figure 4 est une vue en coupe transversale d'une partie de la monture montrant des moyens de fixation magnétiques d'un élément de transformation sur une monture métallique.
Les figures 5 à 9 représentent des variantes de réalisation d'éléments de transformation de l'aspect d'une monture.

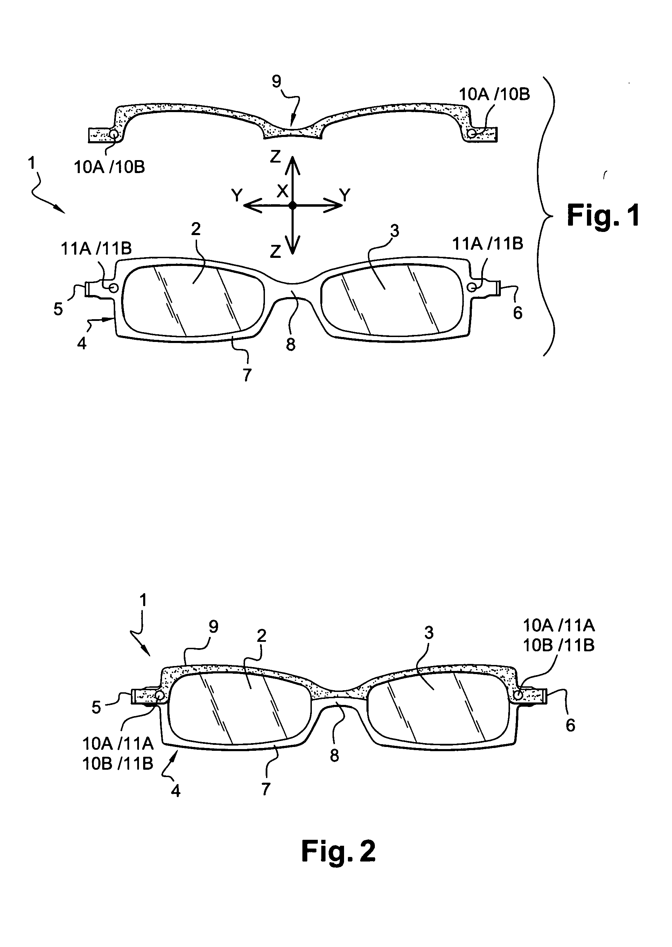

La paire de lunettes 1 représentée sur les figures 1 et 2 est constituée de manière connue par deux verres 2 et 3 soutenus par une monture 4 comprenant deux branches latérales 5 et 6 reliées entre elles par une face 7 au centre de laquelle est formé un nez 8.

Selon le présent exemple de réalisation de l'invention, les lunettes 1 désignées dans leur ensemble, représentées sur les figures 1 et 2 sont susceptibles de recevoir de manière amovible un élément de transformation 9 de l'aspect de ladite monture 4, par l'intermédiaire de moyens de fixation complémentaires, disposés d'une part sur la face 7 de la monture 4 et d'autre sur l'élément de transformation amovible 9.

Selon un exemple de réalisation, les moyens de fixation sont constitués d'une part par au moins un pion 10A 10B réalisé perpendiculairement à la face arrière de l'élément de transformation 9 et d'autre part par un logement 11A 11B sensiblement correspondant réalisé perpendiculairement à une zone avant de la face 7 de la monture 4, ou inversement, le pion 10A 10B étant constitué par un plot ou manchon métallique de dimensions et de formes telles à coopérer de manière coulissante avec le logement correspondant 11A 11B, selon un positionnement adéquat et au fond duquel logement est inséré à force ou collé, un élément magnétique 24 pour constituer des moyens de verrouillage complémentaires destinés à assurer la retenue positive ou la possibilité de retrait du pion 10A 10B d'où de l'élément de transformation 9, selon trois axes XYZ perpendiculaires entre eux, dans le sens de la profondeur, dans le sens longitudinal et dans le sens transversal.

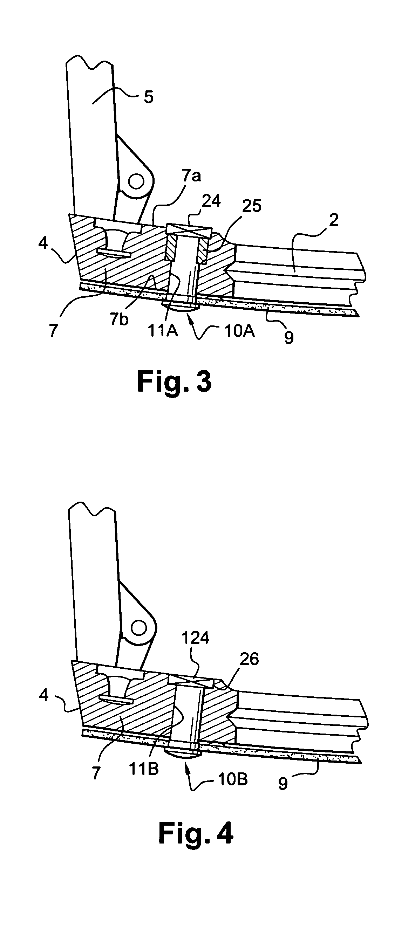

Plus particulièrement, comme représenté sur la figure 3, dans le cas d'une monture en matière plastique, le logement 11A reçoit dans sa partie d'extrémité dirigée vers la partie arrière 7a de la face 7 un insert métallique 25 du type décrit ci-dessus, de manière à renforcer la matière plastique de la monture 4, dans ce cas, il sera d'une hauteur inférieure à l'exemple de réalisation décrit précédemment de manière à ménager un logement à l'élément magnétique 24 qui sera rapporté par l'arrière de la monture.

Par contre, selon l'exemple de la figure 4, dans le cas d'une monture métallique, il n'est pas nécessaire de recourir à l'insert 25 précédemment décrit, car la rigidité de la monture se suffit à elle-même.

Dans ce cas, le pion 10B pourrait être constitué par un cylindre de diamètre uniforme dont le fond plat coopèrera avec l'élément magnétique 24 inséré dans un logement 26 de diamètre plus important que celui du pion 10B.

Toujours selon l'exemple de la figure 11, l'élément 24 affleure la partie arrière 7a de la face 7 de la monture 4.

Pour des questions de facilité de réalisation, le pion 10A ou 10B et son logement 11A, 11B ainsi que leurs parties constitutives sont de sections circulaires et sont disposés symétriquement de part et d'autre de la monture et de l'élément de transformation.

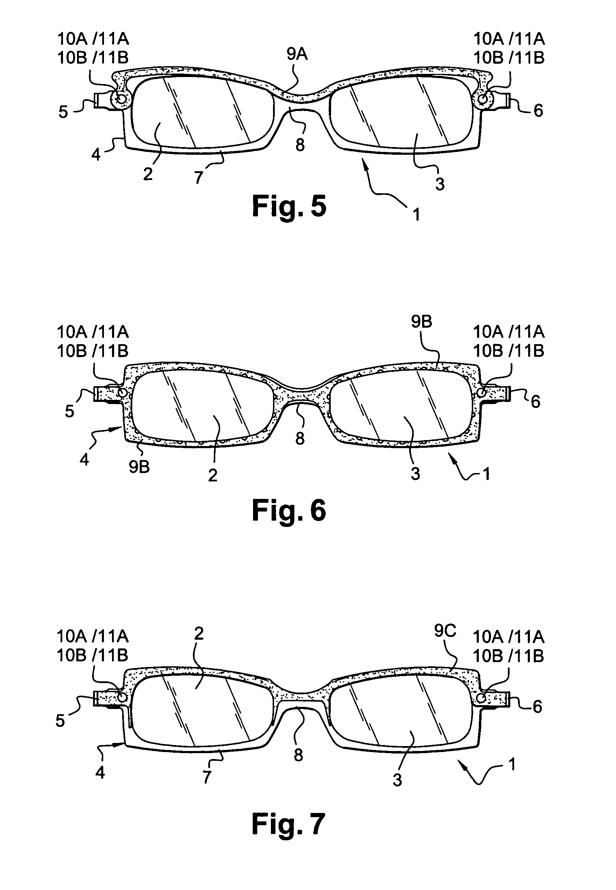

Comme le montre les figures 5 à 9, l'élément de transformation 9, 9A, 9B, 9C, 9D, 9E de la monture 4 est constitué selon un choix de l'utilisateur, par une demi-face inférieure, une demi-face supérieure, une face complète avec des verres solaires ou non, un décor ponctuel ou double.

En l'occurrence, la figure 5 représente un élément de transformation 9A constitué par une demi-face supérieure d'un certain style.

En ce qui concerne la figure 6, on y voit un élément de transformation 9B constitué par une face complète pouvant ainsi changer la forme complète ou la couleur d'une monture de base.

En ce qui concerne la figure 7, celle-ci montre un élément de transformation 9C constitué par une demi-face supérieure apte à supporter des verres solaires.

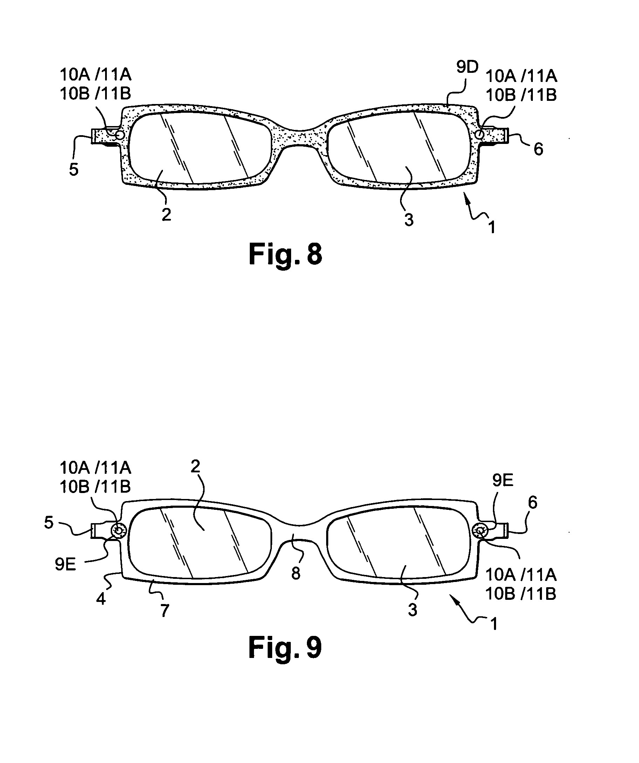

Il en est de même pour la figure 8 où l'élément de transformation 9D est constitué par une face complète supportant également les verres solaires.

En ce qui concerne la figure 9, on y voit des éléments de transformation 9E, qui sont en fait des éléments de décor ponctuels et situés de part et d'autre de la monture et pouvant être constitués par tout motif, tel que fleur, insecte, brillant etc...

Bien entendu, bien que non représenté, l'élément de transformation pourrait être constitué par une demi-face inférieure de tous styles, de toutes formes et de toutes couleurs.

## Revendications

1. Lunettes (1) constituées par deux verres (2, 3) soutenus par une monture (4) comprenant deux branches latérales (5, 6) reliées par l'intermédiaire de charnières à une face (7) sur laquelle est susceptible d'être rapporté de manière amovible au moins un élément (9) de transformation de l'aspect de ladite monture (4), par l'intermédiaire de moyens de fixation complémentaires disposés d'une part sur la face (7) de la monture (4) et d'autre part sur l'élément de transformation amovible (9), **caractérisées en ce que** ces moyens de fixation sont constitués d'une part par au moins un pion (10A 10B) réalisé perpendiculairement à la face arrière de l'élément de transformation (9) et d'autre part par un logement (11A 11B) sensiblement correspondant réalisé perpendiculairement à une zone avant de la face (7) de la monture (4), ou inversement, le pion (10A 10B) étant constitué par un plot ou manchon métallique de dimensions et de formes telles à coopérer de manière coulissante avec le logement correspondant (11A 11B), selon un positionnement adéquat et au fond duquel logement est inséré à force ou collé, un élément magnétique (24) pour constituer des moyens de verrouillage complémentaires destinés à assurer la retenue positive ou la possibilité de retrait du pion (10A 10B) d'où de l'élément de transformation (9), selon trois axes XYZ perpendiculaires entre eux, dans le sens de la profondeur, dans le sens longitudinal et dans le sens transversal.

2. Lunettes (1) selon la revendication 1, **caractérisées en ce que** le pion (10A, 10B) et son logement (11A, 11B) ainsi que leurs parties constitutives sont de sections circulaires et sont disposés symétriquement de part et d'autre de la monture et de l'élément de transformation.

3. Lunettes (1) selon l'une des revendications 1 ou 2, **caractérisées en ce que** l'élément de transformation (9, 9A, 9B, 9C, 9D, 9E) de la monture (4) est constitué selon un choix de l'utilisateur, par une demi-face inférieure, une demi-face supérieure, une face complète avec des verres solaires ou non, un décor ponctuel ou double.
